Europäisches Patentamt

European Patent Office

Office européen des brevets

(11) Publication number: **0 507 437 A2**

# EUROPEAN PATENT APPLICATION

(21) Application number: **92301058.1**

(22) Date of filing: **07.02.92**

(51) Int. Cl.5: **G11B 17/22**, G11B 23/04, G11B 33/14

(30) Priority: **04.03.91 US 664156**

(43) Date of publication of application:
**07.10.92 Bulletin 92/41**

(84) Designated Contracting States:
**DE FR GB**

(71) Applicant: **International Business Machines Corporation**
**Old Orchard Road**
**Armonk, N.Y. 10504(US)**

(72) Inventor: **Patton, David Leland**
**9125 E. Palm Tree Drive**
**Tucson, Arizona 85710(US)**
Inventor: **Winarski, Daniel James**
**647 South Woodstock Drive**
**Tucson, Arizona 85710(US)**

(74) Representative: **Mitchell, Allan Edmund et al**
**IBM United Kingdom Limited Intellectual**
**Property Department Hursley Park**
**Winchester Hampshire SO21 2JN(GB)**

(54) **Self-cleaning automated storage library.**

(57) In a self-cleaning automated storage library, a cleaning routine for the library monitors the existence, type, and number of errors in each peripheral storage device therein. After an error is detected, a retry is invoked and if recovered, the tally is increased. When a threshold number of errors is reached in a device, cleaning of such device is automatically invoked and executed. Cleaning is accomplished using a special cleaning cartridge which is otherwise stored in a storage cell of the library. The library picker retrieves the cleaning cartridge from the storage cell and inserts it into the peripheral storage device requiring cleaning. After completion of the cleaning operation, the error data for such device is reset and the picker returns the cleaning cartridge to the storage cell. The cleaning cartridge is stored in the storage cell most remote from the internal peripheral storage devices to minimise any effect on the normal operation of the library.

If an error is not recovered, a retry in a second device is invoked and the first device is cleared. If the error is recovered in the second device, a retry in the cleaned first device is invoked.

EP 0 507 437 A2

Rank Xerox (UK) Business Services

Fig.7

Fig.8

2

This invention relates to a self-cleaning automated storage library. More particularly, the invention relates to an automated storage library having the machine-executed ability to clean a peripheral storage device therein, and a method and program product therefor.

Modern computers require a host processor including one or more central processing units and a memory facility. The processor manipulates data stored in the memory according to instructions provided to it. The memory must therefore be capable of storing data required by the processor and transferring that data to the processor at a rate capable of making the overall operation of the computer feasible. The cost and performance of computer memory is thus critical to the commercial success of a computer system.

Because today's computers require large quantities of data storage capacity, computer memory is available in many forms. A fast but expensive form of memory is main memory, typically comprised of microchips. Other available forms of memory are known as peripheral storage devices (hereafter "devices") and include magnetic direct access storage devices (DASD), magnetic tape storage devices, and optical recording devices. These types of memories actually store data on storage media therein, such as magnetic tapes, magnetic disks or optical disks. Each of these other types of memory has a greater storage density and lower cost than main memory. However, the other types of memory do not provide the performance provided by main memory. For example, the time required properly to position the tape or disk beneath the read/write mechanism of the drive cannot compare with the rapid, purely electronic data transfer rate of main memory.

It is inefficient to store all the data in a computer system on but a single type of memory. Storing all the data in main memory is too costly and storing all the data on devices reduces performance. Thus, a typical computer system includes both main memory and one or more types of devices arranged in a data storage hierarchy. The data storage hierarchy arrangement is tailored to the performance and cost requirements of the user. In such a hierarchy, main memory is often referred to as primary data storage, the next level of the hierarchy is often to referred to as secondary data storage, and so on. Generally, the highest level of the hierarchy has the lowest storage density capability, highest performance and highest cost. As one proceeds down through the hierarchy, storage density generally increases, performance generally decreases, and cost generally decreases. By transferring data between different levels of the hierarchy as required, the cost of memory is minimised and performance is maximised. Data is thus stored in main memory only so long as it is expected to be required by the processor. The hierarchy may take many forms, include any number of data storage or memory levels, and may be able to transfer data directly between any two distinct memory levels. The transfer of data may employ I/O channels, controllers, or cache memories as is well known in the art.

Images may be included in engineering drawings, financial and insurance documents, medical charts and records, etc. Until recently, it was not possible to store image data in memory in a cost effective manner. Images can take many forms, and therefore cannot be encoded into the binary 0s and 1s of computers as easily and compactly as text. Engineering drawings are typically stored on paper, microfilm, or microfiche requiring manual retrieval when access to a drawing is necessary. The same is true for X-rays and other diagnostic medical images, bank cheques used in transactions between financial institutions, insurance records, images in facsimile documents, and so on. Thus, despite modern computers, it is estimated that most of the world's data is still stored on paper. The cost of filing, storing, and retrieving such paper documents including image data is escalating rapidly. It is no longer acceptable to maintain rooms or warehouses stocked full of documents which must be retrieved manually when access thereto is required. Optical scanners are now capable of converting images into machine readable form for storage on devices, but the storage space required for the image data - although significantly less than that required for paper documents - is still quite large. Numerous storage media are required for most business applications. Automated storage libraries have thus been developed to manage the storage of such media.

Automated storage libraries (hereafter "libraries") include a plurality of storage cells or slots for retaining removable storage media, a robotic picker mechanism, and one or more internal devices. Each storage medium may be contained in a cassette or cartridge housing for easier handling by the picker. The picker operates on command to transfer the storage media between the storage cells and the internal devices without manual assistance. Once a storage medium is mounted in an internal device, data may be written to or read from that medium for as long as the system so requires. The internal devices and storage cells may be considered distinct levels of a data storage hierarchy. In addition, storage media in shelf storage (i.e. not in the storage cells, but instead outside the reach of the robotic picker without manual intervention) may be considered yet another level of a data storage hierarchy.

Libraries may also include one or more external devices. An external device is a peripheral storage device which, unlike internal devices, is not accessible by the picker but must instead be loaded and unloaded manually. External devices may be included in libraries as a convenience to the library operator.

3

A shelf storage medium to which brief access is required will not have to be inserted into the library and retrieved by the picker for mounting in one of the internal devices. External devices may also be a considered a distinct level of a data storage hierarchy.

Several examples of libraries are known, for example the IBM 3850 Mass Storage Subsystem for the storage and retrieval of magnetic tape modules. Magnetic tape cartridge libraries are disclosed in US-A-4,654,727, US-A-4,864,438 and US-A-4,864,511. Optical disk libraries are disclosed in US-A-4,271,489, US-A-4,527,262, US-A-4,614,474 and US-A-4,766,581. The robotic picker mechanisms of these libraries include one or more grippers, each gripper capable of handling one storage medium at a time. The IBM 9246 Optical Library Unit is a two gripper library. As used herein, "libraries" also include similar apparatus for non-computer applications, such as jukeboxes or certain vending machines including internal peripheral storage devices.

Peripheral storage devices may become contaminated with airborne particulates, storage media debris, and other foreign material. Such contaminants may disrupt the movement of media, or the head-media interface, thereby interfering with normal operations of the device. It is therefore known to clean the internal components of a device. Numerous techniques for such cleaning of devices are known in the art. For example, US-A-4,384,311 discloses a magnetic disk drive including means for cleaning the magnetic heads therein. The magnetic heads are cleaned by reducing the spindle motor speed so that the heads fly at a reduced flying height relative to their normal flying height over the disks. Particles larger than such reduced flying height are thereby scrubbed off the heads. Some device cleaning techniques require the insertion of a special cleaning cartridge therein. Such cartridges include means particularly suited for cleaning the transducing head of a device, such as brushes or pads. Examples of cleaning cartridges are disclosed in US-A-4,870,636 and US-A-4,817,078 and JP-A-63-209084, JP-A-63-244467, JP-A-01-251482, and JP-A-02-049284, all of which relate to optical disk drives, and in US-A-4,594,617, which relates to magnetic disk drives.

Peripheral storage devices can be made to signal their need to be cleaned in numerous ways. In the simplest technique, the need for cleaning is indicated when the device stops functioning, or is manually observed functioning at a level of performance below that otherwise expected. In another technique, a device is cleaned at certain intervals of time or use which are predefined from historical observations. Each of these techniques may be improved by building the capability of monitoring itself into the device. A peripheral storage device can be made to monitor its own level of performance, or log time or usage, and signal an operator when cleaning is required via an indicator light or console. In each of these techniques, the actual cleaning of the device requires manual assistance, such as the insertion of the special cleaning cartridge or the invocation of the cleaning operation.

Peripheral storage devices included in libraries must be cleaned just as any other such devices. The need for cleaning a device in a library may be indicated as previously described. Once the need for cleaning is indicated, at least two techniques are known for such cleaning. In a first technique, normal operation of the library is halted to permit service personnel direct access to clean the device manually, again as previously described. In a second technique, the library operator inserts a cleaning cartridge therein and commands the picker to retrieve the cartridge, transfer it to a particular device, and insert the cleaning cartridge into such device. The operator then invokes the cleaning operation required. In both of the aforementioned techniques, manual assistance is necessary. Such manual assistance is expensive, and also degrades the performance of the library by disrupting its normal operations. JP-A-64-030061 and JP-A-02-168481 also provide a limited amount of teaching as to the use of the picker in an automated storage library to assist in cleaning the optical disks and drives therein.

In view of the foregoing, the principal object of this invention is an improved automated storage library.

This invention also seeks to provide an automated storage library with the machine-executed ability to clean a peripheral storage device therein.

This invention further seeks to provide an automated storage library having the machine-executed ability to monitor the existence and number of different types of errors which have occurred in each peripheral storage device therein, and to clean a device reaching a predetermined error threshold for a particular type of error.

In an embodiment of self-cleaning automated storage library according to this invention, a cleaning routine for the library monitors the existence, type, and number of errors in each internal peripheral storage device therein. The number and type of errors occurring in each internal device is considered to be an indication as to whether such a device requires cleaning. When a threshold amount of a certain type of errors is reached in a device, cleaning of such device is automatically invoked and executed. Cleaning is accomplished using a cleaning cartridge which is otherwise stored in a storage cell of the library. The library picker retrieves the cleaning cartridge from the storage cell and inserts it into the device requiring cleaning. After completion of the cleaning operation, the error data for such device is reset and the picker returns the cleaning cartridge to the storage cell. The cleaning cartridge is stored in the storage cell most remote from the internal devices to minimise any effect on the normal operation of the library.

The cleaning routine is implemented as microcode in the system controller or as a utility to the operating system. The cleaning routine can be tailored to monitor different types of errors and to compare their respective numbers with different thresholds for each type of error. Also, different thresholds may be used for different devices and the routine may be tailored to react differently depending upon the particular error threshold reached. In the preferred embodiment, recoverable and non-recoverable errors are distinguished, and recovered and non-recovered errors are also distinguished. An operation which results in a recoverable error is retried. If the retry operation is successful, the error is considered to be recovered. The library maintains a separate tally and threshold for the recovered errors in each peripheral storage device. No tally is maintained for non-recoverable or non-recovered errors.

If upon retry the recoverable error is recovered, and if the recovered error threshold for such device has been reached, such device is automatically cleaned. If upon retry the recoverable error is not recovered, the device in which the error occurred is cleaned and the operation which resulted in the error is repeated using the same storage medium, but in a second device. If the error does not repeat in the second device, the operation is repeated using the same storage medium, but again in the first device. The results of the repeat operations indicate whether cleaning of the first device eliminated the error or whether the cause of the error is related to the particular storage medium or peripheral storage device used.

The scope of the invention is defined by the appended claims; and how it may be carried into effect is hereinafter particularly described with reference to the accompanying drawings in which:-

Fig. 1 is a front, perspective cut-away view of an optical disk library according to the present invention;

Fig. 2 is the same view as in Fig. 1, except that the console panel has been swung aside and the fan has been removed;

Fig. 3 is a rear, perspective cut-away view of the library of Figs. 1 and 2;

Fig. 4 is a view, to an enlarged scale, of the robotic picker and gripper of Fig. 3;

Fig. 5 is a schematic block diagram of the optical disk library of Figs. 1 to 4;

Fig. 6 is a schematic block diagram of the system controller of the library of Figs. 1 to 5;

Fig. 7 is a flowchart of certain operations of the system controller of an optical disk library; and

Fig. 8 is a flowchart of the cleaning routine for the optical disk library.

The invention will be described as embodied in an optical disk library, but could be implemented in any automated storage library.

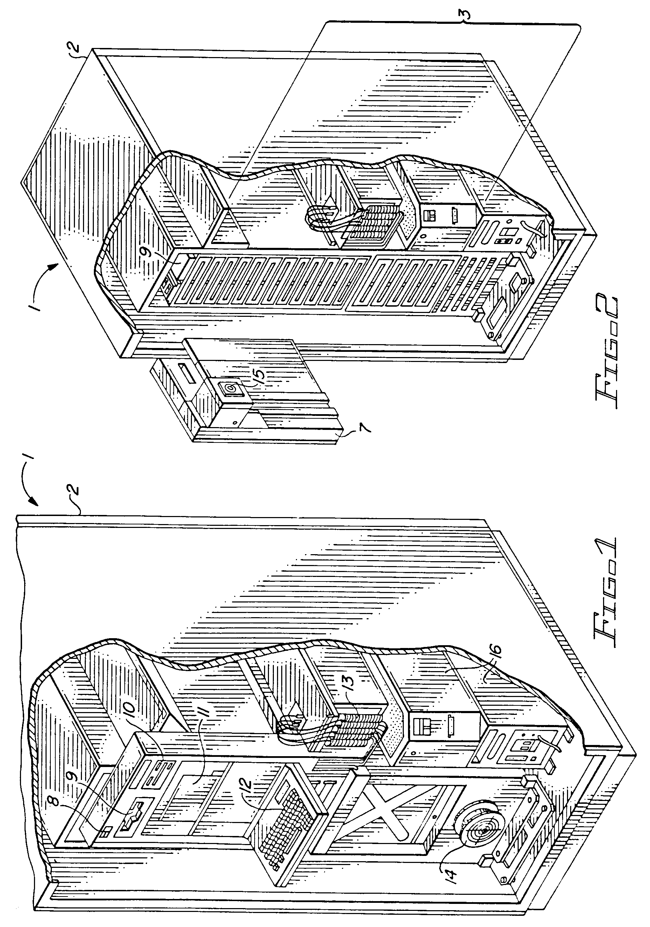

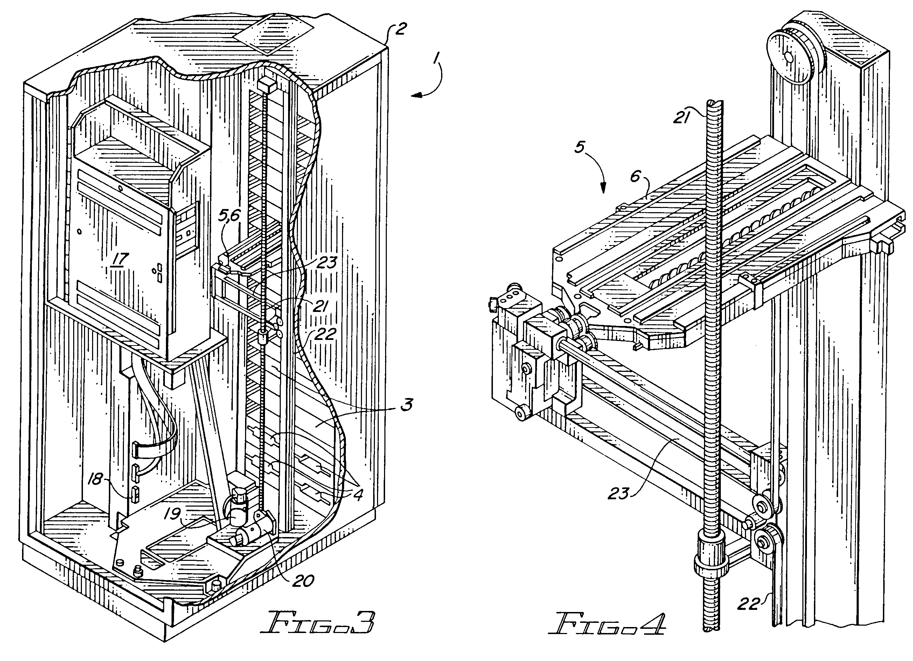

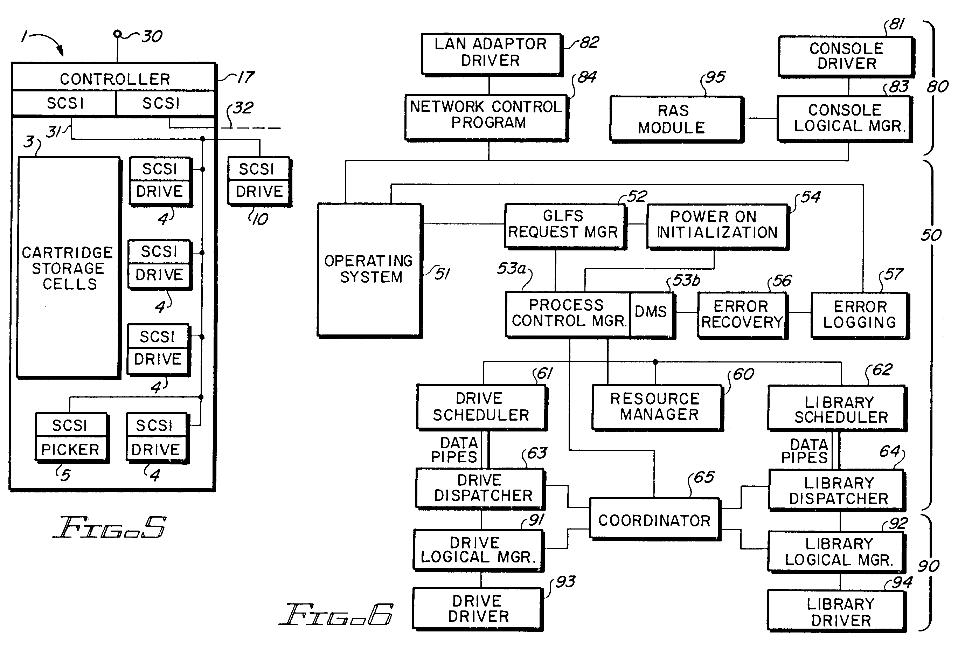

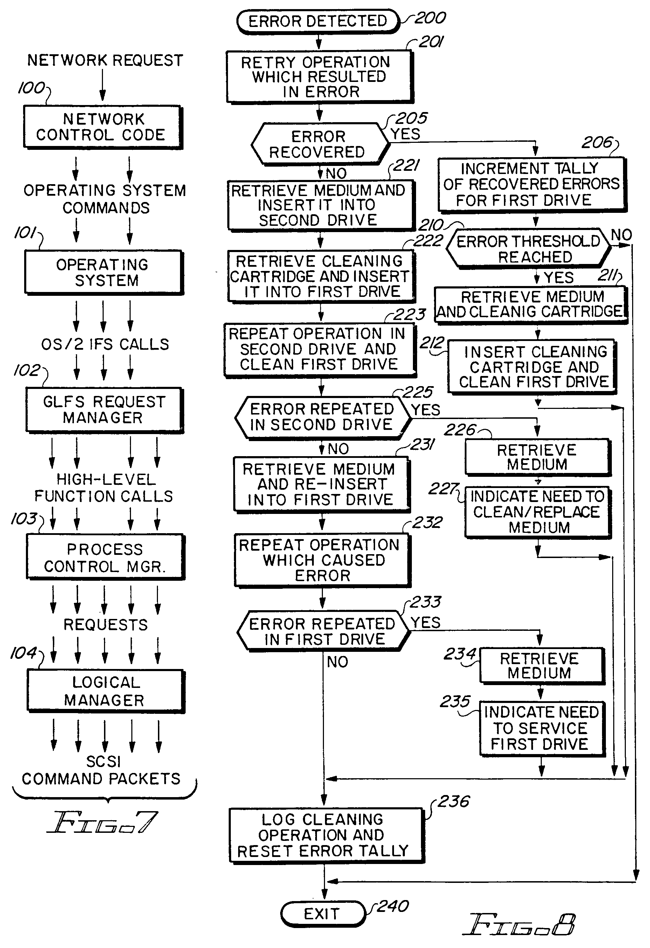

An optical disk library 1 (Figure 1) includes a housing 2 enclosing most of the working parts of the library and having front and rear door panels (not shown) for interior access. Library 1 further includes a plurality of optical disk storage cells 3 (Figure 3) and a plurality of internal optical disk drives 4. Each one of the storage cells 3 is capable of storing one optical disk having data recorded on one or both sides thereof. The data stored on each side of a disk is referred to as a "volume". In the preferred embodiment, library 1 includes one hundred and forty four storage cells 3 arranged in two columns, each of seventy two storage cells, and up to four optical disk drives 4. The optical disks may include ablative, phase-change, magneto-optic, or any other optical recording layers and may be read-only, write-once, or rewritable, as is known, so long as they are compatible with optical disk drives 4. In addition, the optical disks may be recorded in a spiral or concentric track pattern. The precise recording format is not part of the subject invention and may be any known in the art. A robotic picker 5 (Figure 4) includes a single gripper 6 capable of accessing an optical disk in any one of storage cells 3 or drives 4 and transferring such optical disks therebetween. In the preferred embodiment, the optical disks are configured in cartridges for easy handling by gripper 6 and are 5 and 1/4 inch (6.35 mm) form factor disks, but in alternative embodiments could be any size compatible with drives 4 and gripper 6.

Although the front face of housing 2 is not shown in Fig. 1, certain portions of library 1 protrude through such front face of housing 2 for operator access. These portions are part of a console door 7 (Figure 2) and include all or part of a power indicator/switch 8 (Figure 1), an entry/exit slot 9, an external optical disk drive 10, a console 11, and a keyboard 12. Console door 7 can be swung aside to allow access therebehind. Slot 9 is used for inserting optical disks to or removing optical disks from library 1. Commands may be provided by an operator to library 1 via the keyboard 12 to have picker 5 receive an optical disk inserted at slot 9 and transport such disk to a storage cell 3 or drive 4, or to have picker 5 retrieve an optical disk from a storage cell 3 or drive 4 and deliver such disk to slot 9 for removal from library 1. Console 11 allows an operator to monitor and control certain operations of library 1 without seeing inside housing 2. External optical disk drive 10, unlike drives 4, cannot be accessed by gripper 6. Drive 10 must instead be loaded and unloaded manually. Library 1 also includes an optical disk drive exhaust fan 14 (Figure 1), an external disk drive exhaust fan 15 (Figure 2), and power supplies 16 (Figure 1).

Once library 1 is powered on, commands received at keyboard 12 are forwarded to a system controller 17 (Figure 3). In the preferred embodiment, system controller 17 is an IBM PS/2 Model 80 personal computer using the OS/2 operating system. The IBM PS/2 model 80 personal computer includes main memory and one or more storage media, such as those in fixed or floppy disk drives. System controller 17 issues instructions to disk drives 4, external disk drive 10, and picker 5. Drive controller cards 13 (Figure 1) and picker 5 controller card 18 (Figure 3) convert known small computer system interface (SCSI) command packets issued by system controller 17 into the electromechanical action of drives 4, external drive 10, and picker 5. The movement of picker 5 within library 1 is two dimensional in nature in vertical and horizontal directions x and y. Movement in the vertical direction is driven by a vertical direction motor 19 and movement in the horizontal direction is driven by a horizontal direction motor 20. Motor 19 turns a lead screw 21 to move picker 5 vertically. Motor 20 turns belts 22 and 23 to move picker 5 horizontally. In addition, picker 5 may be rotated to bring either side of an optical disk within the grasp of gripper 6 to an upright position. The remaining physical features of library 1 are not shown in the drawing, or are shown but not labelled for the purpose of simplification, but are well known.

Library 1 also includes a cleaning cartridge which can be inserted into a drive 4 for cleaning thereof. The cleaning cartridge may be of any type suitable for such cleaning, such as those disclosed in US-A-4,870,636, US-A-4,817,078, JP-A-63-209084, JP-A-63-244467, JP-A-01-251482, JP-A-02-049284, and JP-A-02-168481. In one embodiment of the cleaning cartridge, the cleaning of a drive requires a distinct cleaning operation after cleaning cartridge insertion. In this embodiment, the cleaning cartridge pad and/or the objective lens of the drive may be brought into contact and moved relative to each other to clean the objective lens. In other embodiments, cleaning of the objective lens may be accomplished by mere insertion of the cleaning cartridge into the drive. For example, the cleaning cartridge may include a brush which is swept across the objective lens of a drive during insertion of the cleaning cartridge. The remainder of the description herein assumes that a distinct cleaning operation is required. However, the type of cleaning cartridge used, and the need for or lack of a distinct cleaning operation is not part of the subject invention.

The cleaning cartridge is stored in a storage cell 3 and the cleaning of a drive 4 is accomplished in a manner similar to that in which an optical disk in library 1 is stored and accessed. To clean a drive 4, picker 5 is commanded to retrieve and store any optical disk already in the drive, and to retrieve the cleaning cartridge and insert it into such drive. After the cleaning operation is completed, picker 5 retrieves the cleaning cartridge and returns it to a storage cell 3. In the preferred embodiment, the cleaning cartridge is stored so as to minimise its effect on the normal operation of library 1. Normally, picker 5 will be commanded to retrieve the optical disks in library 1 significantly more frequently than the cleaning cartridge. Also, picker 5 will be commanded to transfer the optical disks to drives 4 significantly more frequently than to slot 9. It is therefore efficient to maintain the optical disks and drives 4 in as close a proximity as possible. To prevent the storage of the cleaning cartridge from interfering with such close proximity, the cleaning cartridge is assigned the storage cell 3 most remote from drives 4 as its home storage cell. The cleaning cartridge is normally returned to its home storage cell 3 after each use. The disk drives 4 (Figure 3) are located at the bottom of the storage cell columns of library 1. Thus, the preferred home storage cell of the cleaning cartridge is the storage cell 3 located at the top of either storage cell column.

The cleaning cartridge may be also be ejected from library 1 through slot 9 for use in cleaning drive 10. The cleaning of drive 10 requires manual insertion of the cleaning cartridge into drive 10 and manual invocation of the cleaning operation. A second cleaning cartridge could be stored outside library 1 to eliminate the need for the ejection of the cleaning cartridge from library 1 to clean drive 10. However, manual assistance would still be required.

System controller 17 (Figure 5) is attached to one or more host system processors 30 to receive input therefrom and to transmit output thereto. System processor 30 can be a host central processing unit (CPU), such as an IBM 3090 mainframe processor using the MVS or VM operating system or IBM AS/400 midrange computer using the OS/400 or AIX operating system, or a network of processors, such as IBM PS/2 personal computers using the OS/2 or DOS operating system and arranged in a local area network (LAN). The connections to system processor 30 are not shown, but are well known. If system processor 30 is an IBM 3090 mainframe processor, the connection could be made using an IBM System/370 channel attachment according to the interface described in IBM Document # SA22-7091-00, "IBM Channel-to-Channel Adapter", June, 1983, IBM Document # GA22-6974-09, "IBM System/360 and System 370 I/O Interface Channel to Control Unit Original Equipment Manufacturers Information", February, 1988, and IBM Document # SA22-7085-01, "IBM System/370 Extended Architecture Principles of Operation", January, 1987. If system processor 30 is an IBM AS/400 midrange computer, the connection could be made using a direct, SCSI interface attachment wherein library 1 is directly controlled by the host system according to ANSI standard X3T9.2/86-109 rev. 5. If system processor 30 is a plurality of IBM PS/2 personal computers arranged in a LAN, the connection could be made using the NETBIOS control program interface of the IBM Token Ring Network LAN attachment, according to the protocols described in IBM Document # SC21-9526, "Distributed Data Management Level 2.0 Architecture Reference", March, 1989. The preferred embodiment of library 1 will hereafter be described as used as a file server in a LAN environment wherein library 1 appears to the system as a shared, general storage device.

System controller 17 is attached to drives 4, picker 5, and external optical disk drive 10 via known single-ended SCSI connections, including SCSI bus 31. In an alternative embodiment, in which the library includes two housings for disk storage and drives, system controller 17 may be similarly connected to the second physical housing to direct the operations of such other (not shown). The other housing would be essentially identical to that shown in Figs. 1 to 4, except that the other housing would not physically include a system controller therein, but would instead be controlled by system controller 17 via SCSI bus 32. The logical subsystem including both physical housing, one housing with a system controller and one housing without a system controller, is considered to be a single library. In addition, for use in certain environments, two system controllers can be connected via an RS-232 interface (not shown) to create a library including two housings with system controllers and two housings without system controllers, and so on.

System controller 17 is generally designed to support major library functions such as creating and deleting files, writing to and reading from the files, moving optical disks between storage cells 3, drives 4, and slot 9, and providing statistics on usage and errors. Volumes in the library appear as subdirectories in the root directory of a single drive. Labels assigned to each volume represent the subdirectory name. System processor 30 is able to read the root directory, but cannot store files in the root directory. Any paths accessed on a volume appear as paths under the subdirectory element that represents the volume label. Library 1 requires no instruction as to the physical location of the volume within library 1, the drive 4 in which to mount the volume, etc. Instead, system controller 17 makes all such determinations and directs the appropriate actions. Library management is thus transparent to users.

A generic library file server (GLFS) 50 (Figure 6) controls the library with a set of generic, intermediate hardware commands through a formally defined interface described hereinafter. Data is manipulated by GLFS 50 at the logical record level allowing for data access in quantities spanning from a single byte to complete, variable length data objects. An operating system 51 mediates the flow of control and directs incoming operating system commands from the external interfaces into the library. Operating system 51 can be any of several known operating systems and in the preferred embodiment is the OS/2 operating system. The use of the OS/2 operating system generally allows for control of library 1 through standard fixed disk operating system commands. The remainder of the programmed control for library 1 is retained in microcode which is uploaded into the main memory of system controller 17 from a storage medium resident therein at initialisation. In alternative embodiments, some function required to support the microprogrammed control may also be provided as a utility to the operating system running in system processor 30.

The OS/2 operating system includes several advanced operating system concepts integral to system controller 17. These advanced concepts are dynamic link libraries, installable file systems, and multitasking. A dynamic link library (DLL) is a file containing a set of functions each of which may be dynamically loaded as needed. Normally, a program is compiled and linked with the compiled program code of all of the functions the program might invoke before it can be executed. A DLL permits a program to invoke functions compiled and linked into independent modules of program code. OS/2 includes a set of DLL modules that can be invoked as required. Using a custom DLL module, OS/2 can be made to control non-standard storage devices. The custom DLL module is known as an installable file system (IFS). Each function supported by an IFS is known as an entry point. For additional information on installable file systems, see IBM Document # G362-0001-03, "IBM Personal Systems Developer", Fall, 1989. In the preferred embodiment, GLFS 50 is implemented as an IFS to the OS/2 operating system with prescribed entry points.

Another important aspect of the OS/2 operating system is multitasking. Multitasking is the ability of a system to run multiple programs concurrently. The system processor's time is apportioned amongst tasks each appearing to be running as if no other tasks are present. A separate environment is maintained for each task; memory and register contents for each task are isolated to avoid interference with each other. A task and its associated environment is referred to as a "thread". Programs can include a code area and a data area in the main memory of the IBM PS/2 model 80 personal computer. The code area is the section of memory containing the instructions being executed for any given thread. The data area is the section of memory (or registers) that is manipulated during execution of the instructions. Because the same code area

7

may be used for several threads, each thread may point to the same code area for execution but includes its own isolated data area.

An upper interface translator 80 is responsible for translating between upper interface commands and those of GLFS 50. A lower interface translator 90 is responsible for translating between the commands issued by GLFS 50 and those of the lower interface. Translators 80 and 90 are each implemented as distinct linkable modules with clearly defined interfaces, thereby permitting easy attachment of library 1 to new upper and lower interfaces. The only impact of attachment to a new interface is the creation of a new portion of translators 80 and 90; the generic nature of GLFS 50 allows it to remain unchanged.

The upper interfaces of library 1 include the library configuration, map, and system performance files, console 11 (and keyboard 12), and the network interface. The library configuration, library map, and system performance files are not shown in the drawing, but are stored on the fixed disk drive of system controller 17. These files are maintained by the library operator or service personnel. The library configuration file lists various characteristics of the hardware configuration of library 1, such as the number of physical housings in library 1, the number of drives 4 and 10 in each physical housing, whether a drive is an internal drive 4 or an external drive 10, the number of storage cells 3 in each physical housing, the SCSI addresses of each picker 5 and drive 4 or drive 10, etc. The library map file lists various characteristics of the optical disks in library 1, such as the label of the cleaning cartridge and the volume label of each optical disk in library 1, the address of the home storage cell for the cleaning cartridge and each optical disk in library 1, free space information for each optical disk, and certain usage statistics for each optical disk, such as the number of mounts, the date and time of last access, etc. System controller 17 uses the library configuration and map files to identify the number and arrangement of resources in the library, and adjusts the files as the status of the resources in library 1 changes. The system performance file lists certain operator specified parameters not relevant to the present invention. Console 11 is used to exhibit the ongoing status of the library components and make commands and utility functions, such as error reporting, available to the operator. Keyboard 12 allows the operator to make manual input to library 1, such as in response to information received via console 11. Console 11 and keyboard 12 are linked to GLFS 50 by console driver 81 and console logical manager 83. The network is linked to LAN adaptor driver 82 and NETBIOS network control program 84. The network interface allows a processor on the network to remotely gain access to library 1, which acts as a file server thereto.

GLFS request manager 52 is the interface to operating system 51 and responds to the same set of entry points that the OS/2 operating system uses to communicate with any IFS. GLFS request manager 52 is responsible for breaking down operating system commands to accomplish library functions, which it does by calling routines found in a process control manager (PCM) 53a to accomplish each step. PCM 53a is a set of utility routines, some of which require the generation of request blocks, that assist the system in breaking down and processing commands. The routines parse directory path strings, enter optical disks into the library, locate volumes, allocate drives to a volume, flip optical disks so as to present the volume on the opposite side for mounting, mount volumes, demount volumes, exit optical disks from the library etc. A directory management scheme (DMS) 53b is a module of code which satisfies the IFS file specification for monitoring the open/closed status of the user files in library 1, as is well known, and is used to manipulate such user files. Use of the IFS interface in such an internal module allows for easy adaptation of external IFS-style implementations of directory management schemes.

A power on initialisation (POI) module 54 manages the power on and reset functions of the controller and is invoked by operating system 51 at initialisation. POI module 54 is responsible for functions such as determining and reporting the results of component self-testing and reading the library configuration and status files. Errors are processed by an error recovery module 56 and an error logging module 57. Recovery module 56 processes all errors, including dynamic device reallocation and retries of device commands. Logging module 57 is responsible for saving error information and reporting it to the operator via console 11.

A resource manager 60 dynamically allocates and deallocates control blocks in the data area of system controller 17, including request blocks, drive control blocks, and error information blocks. Request blocks are used to request a hardware event for drives 4 or picker 5. Drive control blocks are used to store status information relating to drives 4, as described hereinafter. Error information blocks are used to store the information needed to report, isolate, and possibly retry an error. The allocation and deallocation of control blocks is accomplished using a list of the free space available in the main memory of the IBM PS/2 model 80 personal computer maintained by resource manager 60. Both error recovery module 56 and resource manager 60 are connected to most of the components of system controller 17, such connections not being shown in Figure 6 for simplicity.

Drive and library schedulers 61 and 62 are responsible for verifying some of the contents of the request

8

blocks and entering them into the pipe for the hardware device that will process the request. A pipe is a queued data path leading from one thread to another and can be accessed by any thread knowing the assigned identifier of the pipe. Drive and library dispatchers 63 and 64 are responsible for validating the request blocks, ensuring that the requests are ready to be executed, and dispatching the request as appropriate to a drive logical manager 91 and a library logical manager 92. A coordinator 65 is responsible for coordinating request execution for dispatchers 63 and 64. The coordinator 95 accomplishes this using a table having an entry for each request block received from PCM 53a. Each entry lists the supporting request blocks associated with a particular request block. A request requiring the prior completion of another request is referred to as "dependent", the request that must first be completed is referred to as "supporting". Coordinator 65 withholds execution of dependent requests until associated supporting requests have been executed. If a supporting request fails execution coordinator 65 rejects requests dependent thereon.

Drive and library logical managers 91 and 92 are responsible for translating the generic library commands in the form of request blocks into the equivalent device level commands in the form of SCSI data packets. Logical managers 91 and 92 are also responsible for receiving hardware status information from a drive driver 93 and a library driver 94, respectively. Drivers 93 and 94 directly manipulate the hardware and physical memory. Drivers 93 and 94 perform all communications with their respective hardware and also respond to interrupts. Drive logical manager 91 and drive driver 93 control drives 4, library logical manager 92 and library driver 94 control picker 5. Although not shown in FIG. 6 for simplicity, there are is a multiplicity of drive dispatchers 63, drive logical managers 91, and drive drivers 93, one set for each drive 4 or 10 in library 1. Each set is connected to a different data pipe.

System controller 17 also includes a reliability, availability, and serviceability (RAS) module 95. RAS module 95 diagnoses errors in library 1, and responds thereto, in conjunction with recovery module 56 and logging module 57. The errors include read errors, write errors, seeking errors, tracking errors, power supply errors, etc. Recoverable and non-recoverable errors are distinguished. A "recoverable" error is one which might be eliminated by simply retrying the operation resulting in the error, or by cleaning the drive 4 in which the error occurred. All other errors are "non-recoverable". Recoverable errors include read, write, seek or track failures and the operation resulting in a recoverable error is automatically retried at least once. The retry occurs using the same disk and in the same drive 4. If the retry is successful the error is "recovered". If one or more retries fails to overcome an error, such error is "non-recovered".

RAS module 95 includes an error log. The error log is a database of the non-recovered errors occurring in each drive 4, and of the cleaning activity associated with each such drive. Logging module 57 tracks recovered errors. Logging module 57 also includes a user specified recovered error threshold for each drive 4. The threshold need not be the same for each drive 4, and is specified by the library operator using keyboard 12. The aforementioned information is logged for use by the cleaning routine in cleaning drives 4 without manual assistance. The same information is also logged for drive 10, but the cleaning of drive 10 cannot be accomplished without manual assistance because picker 5 cannot access such drive.

METHOD OF OPERATION

Initialisation of library 1 is accomplished using operating system 51, GLFS request manager 52, resource manager 60, and POI module 54. After self-testing of the library hardware to verify correct function, operating system 51 is loaded and uses the OS/2 CONFIG.SYS file to set the operating system parameters and load drivers. Operating system 51 then generates an initialisation command which is passed to GLFS request manager 52 and then on to POI module 54. POI module 54 reads the library configuration, map, and system performance files, creates the necessary internal data structures in the main memory of the IBM PS/2 model 80 personal computer, and initiates separate threads for each hardware component of library 1 specified in the library configuration file. Resource manager 60 initialises internal tables used in memory management. POI module 54 then queries system controller 17 and controller cards 13 and 18 for power-on self-test results and reports any problems to error recovery module 56. Any errors detected during initialisation are logged by error logging module 57. When system controller 17 is in a ready state, the system is receptive to activity from console 11 or the network interface.

When a request (Figure 7) is received from the network interface, the network control code will convert the request into a set of standard OS/2 operating system commands at step 100. Operating system 51 will then issue the appropriate IFS operating system calls to process the operating system commands at step 101. GLFS request manager 52 receives the calls and breaks them down into simpler functions. For each function, GLFS request manager 52 will call a routine PCM 53a and/or DMS 53b and pass the appropriate subset of the data required for the routine as parameters at step 102. For each routine requiring hardware activity, PCM 53a and/or DMS 53b at step 103 calls resource manager 60 to create a hardware level request block, issue such block to schedulers 61 and 62, and informs coordinator 65 of any hardware dependencies to allow for the proper sequencing of the request. PCM 53a also returns control and status information to GLFS request manager 52 as each routine is completed.

After checking the list of free space available in the main memory of the IBM PS/2 Model 80 personal computer, resource manager 60 allocates the required memory space for the request block. The routines calling resource manager 60 provide most of the information for a control block, resource manager 60 fills in certain additional information to the control block identifier and the request block identifier. Drive scheduler 61 and library scheduler 62 receive all hardware event requests as request block identifiers and forward them to the data pipes connected to drive dispatcher 63 and library dispatcher 64, respectively. Dispatchers 63 and 64 wait on their respective data pipe for the existence of a request block identifier. After receiving a request block identifier, dispatchers 63 and 64 call coordinator 65 to determine if the request block is ready to be executed. Coordinator 65 checks the table of request block dependencies and prevents dispatchers 63 and 64 from issuing the request block identifier until all supporting request blocks have been completed. When all request block dependencies have been met, the request block identifier is issued to the appropriate one of logical managers 91 and 92.

At step 104, logical managers 91 and 92 receive the request block identifiers, construct the necessary SCSI hardware command packets to accomplish the requests, and issue the packets to drivers 93 and 94. The hardware then physically performs the requests. As each request is completed logical managers 91 and 92 signal such completion. Dispatcher 63 or 64 then issues the identifier of the next request block to the respective logical manager 91 or 92.

Generally, library mount/demount operations will continue on an as needed basis as long as there are existing requests to mount volumes. If at any time during the aforementioned operations an error condition is encountered in a drive 4, a CHECK CONDITION is reported by such drive 4 and the respective logical manager 92 issues a REQUEST SENSE. The drive 4 then responds with information indicating the nature of the error and recovery module 56 uses such information to build an error information block, including the error type and a drive identifier. The format of the error information block and protocols used to generate it are not relevant to the subject invention. If the error is recoverable, a cleaning routine is automatically called.

The cleaning routine is invoked upon error detection at step 200 (Figure 8). At step 201, the operation on the drive 4 which resulted in the recoverable error is retried one or more times on the same drive. Step 205 branches according to the success of the retry operation. If the retry operation is successful, (i.e. the recoverable error is indeed recovered), step 205 branches to step 206 to increment the tally of recovered errors for the drive 4 in which the error occurred. Step 210 then branches according to the number of recovered errors tallied for such drive. If the number of recovered errors has not reached the predetermined threshold, the flow skips to step 240 to exit the cleaning routine. If the number of recovered errors has reached the predetermined threshold, the picker is then commanded to retrieve the optical disk in such drive (i.e. remove the disk from the drive and return it to its home storage cell), and retrieve the cleaning cartridge at step 211 and insert it into such drive at step 212, at which also, the drive 4 is commanded to perform any cleaning operation required. The flow then skips to step 236 to log the cleaning operation in RAS module 95 and reset the recovered error tally in logging module 57 to zero. The cleaning routine is exited at step 240.

If the retry operation of step 201 is not successful, (i.e. the recoverable error is not actually recovered), step 205 branches to step 221 to command the picker to retrieve the optical disk in the drive 4 detecting the non-recovered error (i.e. the first drive) and insert such disk into another drive 4 (i.e. a second, different drive 4) within the library. At step 222, the picker is commanded to retrieve the cleaning cartridge and insert it into the first drive. The operation which resulted in the non-recovered error in the first drive is then repeated in the second drive, and the first drive is commanded to perform any cleaning operation required at step 223. Step 225 then branches according to the reoccurrence of the non-recovered error of the first drive in the second drive. If the error is repeated in the second drive, the error is likely to be the result of an optical disk problem since it occurred it in both drives 4. Thus, the picker is commanded to retrieve the optical disk at step 226 and the need to clean or replace the disk is indicated in RAS module 95 at step 227. The flow then skips to step 236 to log the cleaning operation in RAS module 95 and to reset the recovered error tally in logging module 57 to zero. The cleaning routine is exited at step 240.

If the error is not repeated in the second drive, the picker is commanded to retrieve the optical disk from the second drive and re-insert such disk into the first drive at step 231. The operation which resulted in the non-recovered error in the first drive is then repeated therein at step 232, and step 233 branches according to the reoccurrence of such non-recovered error. If the error is repeated in the first drive, the error is likely to be the result of a problem in the first drive unrelated to contamination since it did not occur in the second drive and yet reoccurred in the first drive even after cleaning thereof. Thus, the picker is commanded to retrieve the optical disk at step 234 and the need to service the first drive is indicated at step 235. At step 236, the cleaning operation is logged in RAS module 95 and the recoverable error tally in logging module 57 is reset to zero. At step 240, the cleaning routine is exited. If the error is not repeated in the first drive, the flow skips directly from step 233 to steps 236 and 240.

Shown below is a pseudocode listing for the cleaning routine. The listing starts in code module RASCLEAN after a recoverable error is detected in a drive 4 and retried (i.e. at step 205 of Fig. 8). DRIVE_X is the first drive and DRIVE_Y is the second drive. KEY is the type of error; KEY_03 indicates a non-recovered error. TALLY is the number of recovered errors detected in a drive since the last reset. SENSE is an identifier of the type of non-recovered error. CELL is the home storage cell of the respective disk or cleaner cartridge. CEMENU is a table resident in RAS module 95. The table includes service actions required or completed by the service personnel and accessible using console 11. The LOG subroutine may also include an error condition exit, distinct from a simple exit and return, if the BAD_DISK and BAD_DRIVE subroutines are exercised.

---------------------------------------------------------------

```
RASCLEAN;

        IF KEY_DRIVE_X = 03 THEN GOTO KEY_03;

        TALLY_DR_X = TALLY_DR_X + 1;

        IF TALLY_DR_X < THRESHOLD THEN EXIT;

        GOTO CLEAN;

        GOTO LOG;


KEY_03;

        MOVE_DISK: DRIVE_X TO DRIVE_Y;

        GOTO CLEAN;

        RETRY IN DRIVE_Y;

        IF KEY_DRIVE_Y = KEY_DRIVE_X AND SENSE_DRIVE_Y = SENSE_DRIVE_X
                THEN GOTO BAD_DISK;

        OLDKEY_DRIVE_X = KEY_DRIVE_X;

        OLDSENSE_DRIVE_X = SENSE_DRIVE_X;

        MOVE_DISK: DRIVE_Y TO DRIVE_X;

        RETRY IN DRIVE_X;

        IF OLDKEY_DRIVE_X = KEY_DRIVE_X AND OLDSENSE_DRIVE_X =
                SENSE_DRIVE_X THEN GOTO BAD_DRIVE;

        GOTO LOG;


CLEAN;

        IF DISK IN DRIVE_X THEN MOVE_DISK: DRIVE_X TO CELL;
```

```
      MOVE_CLEANER_CARTRIDGE: CELL TO DRIVE_X;

      EFFECT CLEANING OPERATION IN DRIVE_X;

      MOVE_CLEANER_CARTRIDGE FROM DRIVE_X TO CELL;

      RETURN;


LOG;

      LOG CLEANING OF DRIVE_X IN CEMENU;

      TALLY_DR_X = 0;

      EXIT;


BAD_DISK;

      MOVE_DISK: DRIVE Y TO CELL;

      INDICATE NEED TO CLEAN/REPLACE DISK IN CEMENU

      GOTO LOG;


BAD_DRIVE;

      MOVE_DISK: DRIVE_X TO CELL;

      INDICATE NEED TO SERVICE DRIVE_X IN CEMEMU

      GOTO LOG;
```

----------------------------------------------------------------

While the invention has been described with respect to a preferred embodiment thereof, it will be understood by those skilled in the art that various changes in detail may be made therein without departing from the scope of the invention. For example, while the invention has been disclosed in the context of an optical disk library, similar consideration may make it equally applicable to other types of libraries. In addition, numerous variations in the libraries may be made, such as the number of drives and storage cells. For example, in an alternative embodiment, library 1 includes thirty two storage cells 3 and two drives 4. System controller 17 is located external to housing 2, which is of reduced size. The remaining features of library 1 are essentially unchanged. In accordance with configurations of library 1 including a multiple gripper picker, it is not required that the cleaning cartridge or optical disks be returned to their home storage cell before another is retrieved. Also, step 223 of the cleaning routine could be serialised such that the cleaning of the first drive is delayed pending whether the non-recovered error is repeated in the second drive, thereby preventing excess cleaning operations which wear drives 4. Step 236 would also be shifted accordingly. Accordingly, the invention disclosed herein is to be limited only as specified in the following claims.

## Claims

1. An automated storage library comprising at least one peripheral storage device (4) storage cells (3) for storing data storage media and a device-cleaning cartridge, means (5,6) for transferring a storage medium or the device-cleaning cartridge between storage cells (3) and the device (4) or one of the devices (4), and means coupled to the or each device (4) and to the transferring means (5,6) for tallying errors occurring in the device or devices, and, upon the satisfaction of certain criteria, for commanding the transferring means (5,6) to retrieve the cleaning cartridge and insert the same into the device.

2. A library according to claim 1, wherein the criterion to be satisfied is that a predetermined error threshold has been reached, and the coupled means commands the transferring means to retrieve the storage medium in the device before retrieving the cleaning cartridge.

3. A library according to claim 1, wherein the library comprises a plurality of devices (4), the criterion to be satisfied is that a predetermined error threshold has been reached in a device, and the coupled means commands the transferring means (5,6) to retrieve the storage medium in the device and insert the same into a different device.

4. A library according to claim 1, wherein the library comprises a plurality of devices (4), the errors may be non-recoverable, the criterion to be satisfied is that a non-recovered error has occurred in a device, and the coupled means commands the transferring means (5,6) to retrieve the storage medium in the device and insert the same into a different device.

5. A library according to claim 1, 2, 3 or 4, wherein the errors may be recoverable, and the tallying means tallys the recovered errors in the or each device, and the criterion to be satisfied is that a predetermined recovered error threshold has been reached.

6. A library according to any preceding claim, wherein the storage cell (3) which is most remote from the device (4) or devices (4) is the home storage cell of the cleaning cartridge.

7. A library according to any preceding claim, wherein the or each device (4) is an optical disk drive.

8. A library according to any preceding claim, wherein the transferring means is a robotic picker (5,6).

9. A method of cleaning a peripheral storage device (4) in an automated storage library (1) according to any preceding claim, comprising the steps of tallying the errors occurring in the or each device (4), detecting that certain criteria have been satisfied, retrieving the device-cleaning cartridge and inserting the same into the device (4).

10. A method according to claim 9, wherein the criteria to be satisfied is the detection that a predetermined error threshold in the device (4) has been reached, and the storage medium in the device is retrieved before insertion of the device - cleaning cartridge into the device (4).

11. A method according to claim 9, wherein the library includes a plurality of storage devices (4), the criterion to be satisfied is the detection that a predetermined error threshold has been reached in a device, and the storage medium in the device is retrieved and inserted into a different device (4).

12. A method according to claim 9, wherein the library includes a plurality of storage devices (4), the errors may be non-recoverable, the criterion to be satisfied is the detection that a non-recovered error has occurred in a device, and the storage medium in the device is retrieved and inserted into a different device (4).

13. A method according to claim 9, 10 , 11 or 12, wherein the errors may be recoverable, and the criterion to be satisfied is the detection that a predetermined recovered error threshold for the device has been reached.

14. A method according to claim 9, 10, 11, 12 or 13, including the steps of cleaning the device, resetting the tally of errors in the device, retrieving the cleaning cartridge, and storing the cleaning cartridge in the home storage cell.

15. A method according to claim 11 or 12, or any claim appendant to claim 11 or 12, including the steps of repeating the operation which resulted in the nonrecovered error in the different device and, if the nonrecovered error is not repeated in the different device, retrieving the storage medium in the different device, and inserting the storage medium in the original device after cleaning and removal of the cleaning cartridge.

FIG.1

FIG.2

EP 0 507 437 A2

FIG. 4

FIG. 3

FIG. 5

FIG. 6

NETWORK REQUEST

100 — NETWORK CONTROL CODE

OPERATING SYSTEM COMMANDS

101 — OPERATING SYSTEM

OS/2 IFS CALLS

102 — GLFS REQUEST MANAGER

HIGH-LEVEL FUNCTION CALLS

103 — PROCESS CONTROL MGR.

REQUESTS

104 — LOGICAL MANAGER

SCSI COMMAND PACKETS

**FIG. 7**

ERROR DETECTED — 200

201 — RETRY OPERATION WHICH RESULTED IN ERROR

205 — ERROR RECOVERED — YES

NO

221 — RETRIEVE MEDIUM AND INSERT IT INTO SECOND DRIVE

222 — RETRIEVE CLEANING CARTRIDGE AND INSERT IT INTO FIRST DRIVE

223 — REPEAT OPERATION IN SECOND DRIVE AND CLEAN FIRST DRIVE

225 — ERROR REPEATED IN SECOND DRIVE — YES

NO

231 — RETRIEVE MEDIUM AND RE-INSERT INTO FIRST DRIVE

232 — REPEAT OPERATION WHICH CAUSED ERROR

233 — ERROR REPEATED IN FIRST DRIVE — YES

NO

206 — INCREMENT TALLY OF RECOVERED ERRORS FOR FIRST DRIVE

210 — ERROR THRESHOLD REACHED — NO

YES

211 — RETRIEVE MEDIUM AND CLEANIG CARTRIDGE

212 — INSERT CLEANING CARTRIDGE AND CLEAN FIRST DRIVE

226 — RETRIEVE MEDIUM

227 — INDICATE NEED TO CLEAN/REPLACE MEDIUM

234 — RETRIEVE MEDIUM

235 — INDICATE NEED TO SERVICE FIRST DRIVE

236 — LOG CLEANING OPERATION AND RESET ERROR TALLY

EXIT — 240

**FIG. 8**